# EUROPEAN PATENT APPLICATION

(11) **EP 1 541 461 A1**
(43) Date of publication of application: **15.06.2005**
(21) Application number: 03790970.2
(22) Date of filing: 29.08.2003
(51) Int. Cl.: B63H 1/16, B63H 1/26, B64C 11/18

(54) **PROPELLER, PROPELLER PROPULSION SYSTEM AND VESSEL COMPRISING PROPULSION SYSTEM**

(30) Priority: 30.08.2002 ES 200202000; 08.08.2003 WO PCT/ES03/00415; 25.08.2003 WO PCT/ES03/00436
(71) Applicant: Romero Vazquez, Juan José, 21240 Aroche (ES)
(72) Inventor: Romero Vazquez, Juan José, 21240 Aroche (ES)
(74) Representative: Carvajal y Urquijo, Isabel
(86) International application number: PCT/ES2003/000441
(87) International publication number: WO 2004/020280

(57) **Abstract**

The invention refers to a propeller comprising a base (2, 15) and a plurality of blades (1, 14) extending from said base in an upstream tilted manner, i.e. in the direction corresponding to the forward motion direction (D1) of the craft. The blades extend in a direction forming an acute angle α with the forward motion direction, 10° ≤ α ≤ 80°.

The invention also refers to a propulsion system including the propeller, as well as to a craft including the propulsion system.

## Description

### FIELD OF THE INVENTION

The invention is related to propellers, such as naval propellers, aerial propellers and fan propellers for turbojet engines.

### BACKGROUND OF THE INVENTION

The propellers of conventional crafts comprise a base or "hub" from which the blades of the propeller extend. The blades comprise a blade body having two ends, namely, a "blade root" or "blade foot", which is where the blade is joined to the base of the propeller, and an opposite end called "blade tip"; the tip of the blade corresponds to the point of separation between a leading edge (or advancing edge) of the blade and a trailing edge (or following edge) of the blade; with regard to the propeller, the terms leading and trailing refer to the movement of the fluid in which the propeller is operating.

A propeller is normally configured so as to rotate about an axis of rotation, driven by a drive shaft joined to the engine of the craft and transmitting motion from the engine to the propeller. The propeller is configured such that when rotating in a "normal" rotating direction, it propels the craft in a first "forward" or "upstream" direction, corresponding to the forward motion direction of the craft, at the same time it propels fluid in a second direction opposite to said first direction (herein, the term "direction" also includes the "orientation" of the direction); the second direction is also called the "downstream" direction. Both the first and second directions are substantially parallel to the axis of rotation of the propeller.

The blades normally have an elongated and curved cross section, and it can be said that each blade body has two main surfaces, one concave surface corresponding to the pressure side, and another convex surface corresponding to the suction side. For the blade to have good performance, the propeller must rotate in the direction of the blade pressure side, i.e. such that the pressure side "propels" the water. This rotational direction is the one corresponding to the "forward" motion of the craft; if the propeller is rotated in the opposite direction, the craft "reverses" motion (with worse performance of the propeller since it is the suction side and not the pressure side the one "propelling" the water: in reverse motion, when the propeller rotates in the opposite direction, the pressure side, which is concave and acts as the suction side, stalls since the boundary layer is released, causing turbulences, which worsens the performance).

In conventional or classic propellers, the blades are extended, in their blade foot to blade tip extension, in a direction which is orthogonal or perpendicular (or almost perpendicular) to the axis of rotation of the propeller. This is the configuration originally established so that the flow of water propelled by the propeller was displaced "downstream", in a direction substantially parallel to the axis of rotation of the propeller and substantially opposite to the forward motion direction of the craft. Hereunder, this type of propellers is called "classic propellers".

There are several variants of the aforementioned conventional or "classic" propeller configuration of. For example, in currently used recreational boats, the blades can have a certain "downstream" inclination, such that the blades extend, from the blade foot to blade tip, in a direction which, in a plane including the axis of rotation, forms an obtuse angle with the "first direction" mentioned above, i.e. with the direction corresponding to the forward motion direction of the craft. Said obtuse angle can be between 95 degrees and 110 degrees, corresponding to a blade inclination of about 5-20 degrees "backwards" from the conventional position perpendicular to the axis of rotation of the propeller. This "inclination" can reach 30 degrees in some high performance boats, and is known as rake or "backward rake". The purpose of this "backward" or "downstream" rake is to reduce vibrations in the propulsion mechanism (in the drive shaft, etc.).

On the other hand, marine propellers have been developed in which said rake is not always obtuse, specifically, propellers are known in which the angle can be between 85 and 110 degrees (i.e. the blades of which have a rake of between 5 degrees upstream and 20 degrees downstream with regard to a plane perpendicular to the axis of rotation passing through the center of the hub), according to the operating conditions of each engine and boat. It seems that the 5-degree upstream rake has been carried out so as to increase the dynamic equilibrium of the free propeller (when it is taken out of the water), under certain navigation conditions and turns. In the rest of marine propellers, in ships and submarines, the blades are usually perpendicular to the axis of rotation of the propeller, or slightly tilted "backwards" (= "downstream") to reduce vibrations.

In aerial propellers, the blades are usually perpendicular to the axis of rotation of the propeller and in some cases, with the ends tilted in a direction contrary to the rotation to delay the occurrence of shock waves.

In helicopter main rotors, the blades are mainly subjected to two forces, an aerodynamic force parallel to the axis of the rotor, corresponding to the lift due to the blade, and another dynamic force due to the rotation, which is the centrifugal force. In an articulated rotor, assuming the blade is rigid, the latter will take the equilibrium position of the previous forces, forming a certain angle with the plane perpendicular to the axis of the rotor, called coning angle. This value is normally less than 8 degrees, 4 degrees being the most frequent value. In some types of rotors, the assembly of the blade to the hub of the rotor is carried out with a theoretical coning angle of about 4 degrees "upstream" for the purpose of reducing the bending moment at the blade foot.

Other variants of the conventional propellers mentioned above are disclosed and illustrated in the following patent documents:
JP-A-58-126288 discloses and illustrates a naval propeller with an adjustment ring and with the main blades tilted "backwards", i.e. downstream; the main blades have a small blade on the end thereof, tilted upstream, the main function of which is to increase the flow generated by the converging ring 15, increasing the thrust force according to the document.
WO-A-91/07313 discloses a naval propeller with blades having two small plates or fins on the ends thereof, one on each side, forming a 90 degree angle with a plane perpendicular to the axis of rotation of the propeller, for the purpose of decreasing the blade tip vortex.
US-A-5176501 discloses a propeller composed of a square box or diamond shape formed by blades, turned by (or which turns) a shaft passing diagonally through the square box or diamond shape.
US-A-1438012 discloses a propeller having two opposite, helical-shaped blades.
US-A-283592 discloses a naval propeller in which the most peripheral part (the part closest to the tip) of each blade is tilted in the rotational direction of the blades in order to reduce centrifugal action.
US-A-5890875 discloses a propeller with blades formed by the bending of a sheet, such that the sheet forms "loops".
US-A-4664593 discloses a fan with the peripheral end of the blades bent in the rotational direction of the fan in order to decrease noise.

One drawback in relation to conventional propellers, i.e. with classic propellers, with the blades perpendicular to the axis of rotation of the propeller or propellers with the blades slightly tilted "backwards" (= "downstream") for the purpose of reducing vibrations, is that conventional propellers have a relatively low performance due to the losses caused by the blade tip vortex, crossflow at the trailing edge of the blades, and slip. This drawback seems to be particularly severe in naval propellers, where performance is many times 60%, which means that a large part of the power supplied by the engine is lost, at least in part due to the discussed factors. The objective of the invention is to provide a propeller and a propulsion system for crafts by means of a propeller with reduced losses due to blade tip vortex and crossflow at the trailing edge, and with less slip.

### DESCRIPTION OF THE INVENTION

A first aspect of the invention refers to a propeller comprising:
a base (many times also called the "hub" of the propeller);
a plurality of blades, each blade having a first end joined to the base (this end is normally known as the blade root or foot) and a second free end defining a blade tip separating a leading edge (also known as "advancing edge") of the blade from a trailing edge (also known as "following edge") of the blade;
the propeller being configured to rotate about an axis of rotation, driven by a drive shaft of a craft, for the purpose of propelling said craft in a first direction parallel to the axis of rotation and corresponding to the forward motion direction of the craft, propelling a fluid in a second general direction opposite to said first direction;
the blades extending in a third direction from the first end towards the blade tip (in most cases, said third direction coincides with the direction in which the blade section extends in the plane including the axis of rotation and blade tip).

According to the invention, said third direction forms, in a plane including the axis of rotation, an acute angle α with said first direction, 10° ≤ α ≤ 80°.

In other words, the blades "are tilted forwards" or "upstream" (with regard to the axis of rotation), i.e. they are not perpendicular to the axis of rotation or "tilted downstream", as is the case with the conventional propellers discussed above. Thus, according to the invention, the tilted configuration of the blades forms a sweep surface or area of the propeller corresponding to a body which can be substantially conical or frusto-conical and the diameter of which decreases in the second direction ("backwards" or "downstream").

The expression "second general direction" refers to the "general" direction of the flow that "exits" the propeller. Said second direction is generally "backwards" or "downstream", although logically there are turbulences, etc., making some "individual" portions of the fluid follow other courses.

Preferably 20° ≤ α ≤ 70°, more preferably 30° ≤ α ≤ 60°, even more preferably 40° ≤ α ≤ 50°. In a preferred embodiment, α = 45°.

The propeller may have only two blades; for example, two-blade propellers are frequently used in outboard engines and in airplanes.

However, the propeller can also have at least three blades; this type of propellers is many times preferable in displacement ships and the like.

The propeller preferably comprises at least three blades, preferably equidistantly distributed around the base of the propeller.

The blades can have an elongated configuration in the direction from the first end (blade foot) to the second end (blade tip).

Each blade can have a leading edge, located upstream from a trailing edge, both the first edge and the rear edge substantially extending in said third direction, substantially from the first end to the second end. The blade tip separates the leading edge from the trailing edge.

A second aspect of the invention refers to a propulsion system comprising at least one propeller according to the invention and a drive shaft joined to the propeller such that the drive shaft can make the propeller rotate about its axis of rotation. The shaft can rotate driven by the craft engine incorporating the propulsion system.

The propulsion system can comprise a nozzle concentrically located around the axis of rotation of the propeller and laterally enveloping the propeller, said nozzle having a fluid entry front end and a fluid exit rear end. The use of the nozzle can be especially advantageous in marine applications.

Each blade can be joined to the drive shaft, or to an element configured as an axial extension of the drive shaft, by means of a retention brace or by means of a plurality of retention braces, which serve to prevent the blades from becoming deformed or displaced due to the forces acting on them during use thereof. Each retention brace is preferably arranged perpendicularly (or substantially perpendicularly) with regard to the axis of rotation of the propeller.

Each retention brace preferably has the shape of a blade in feather position for craft cruising speed (the retention braces thus have no traction effect at cruising speed). When the braces have the blade shape, they must have a symmetrical profile (with convex pressure side and suction side) for minimum aerodynamic drag.

The propulsion system can be part of a turbojet fan, each blade being joined to a propeller base being part of the drive shaft constituted of a rotor of the turbojet, each blade being joined to said rotor also by means of at least one brace. The propeller can be radially surrounded by a tube-fairing.

A third aspect of the invention refers to a craft including a propulsion system according to the invention. The drive shaft of the propulsion system is joined to the machine of the craft which transmits the turning motion to the drive shaft. The craft can be an aquatic craft, a submarine craft or an aircraft.

The least difficult option for the shape of the blades is that the entirety of the blades, from the root to the tips, i.e. along their entire length, have a noticeably uniform upstream rake.

To explain with the greatest simplicity what takes place, that which occurs in a propeller with blades at a right angle, with α = 45 degrees (i.e. the blades are tilted 45 degrees "forward" or "upstream"), will be analyzed, operating in water at a considerable depth or in the air with a low number of revolutions per minute, with no other additional element, only the hub or base and the blades.

With this tilted arrangement of the blades, it has been verified that in any fluid, the fluid jet or jet stream generated by the propeller does not continue in diverging downstream directions (and orientations of direction) from the sweep area of the propeller, i.e. it does not continue in directions perpendicular to the conical sweep surface of the propeller (however, these directions perpendicular to the conical sweep surface are the actual thrust directions of the blades on the fluid). In an "at first glance not logical" manner, both the fluid inlet flow in the propeller and the fluid outlet flow follow a direction substantially parallel to the axis of rotation of the propeller (to not complicate the explanation, it is stated herein that the direction is substantially parallel to the axis of rotation, although in reality the fluid jet has a certain convergence in the downstream direction, as in the case of the classic propeller). Thus, a deflection of the fluid occurs with regard to the "at first glance logical" directions that the fluid should follow and which would be perpendicular to the conical sweep area (giving rise to a divergent jet displacing an enormous amount of fluid mass). What actually occurs is a physical phenomenon which can be called "static fluid effect" or "external fluid effect" and having consequences similar in some (not all) aspects to the known "ground effect" in helicopter rotors, airplane wings or air-cushion vehicles, caused by the deflection of the fluid on the ground. In the case of the present invention, the deflection of the fluid occurs in the sweep area itself (and not on the ground or the water, which are always at a certain distance from the blade sweep area). Effectively, the flow of the jet propelled by the propeller is substantially parallel to the axis of the propeller, since this is where the entire fluid mass propelled by the propeller about its axis of rotation finds less drag for progressing in its movement. Therefore, it is the enormous drag provided by the fluid located in the peripheral directions perpendicular to the conical sweep area, the inertia or linear momentum thereof, which forces the flow which flows out of the propeller to continue in the direction substantially parallel to the axis of rotation of the propeller. Therefore, there is a deflection of the jet or flow and, as it is known, when a jet undergoes deflection by an external element, the larger the angle of deflection is and the closer the blades are to the area where the deflection occurs, the greater the increase of the reaction force of the nozzle, wing or rotor generating the jet. In the case of the invention, the deflection is not caused by nearby ground or water, but rather by the fluid at rest or in motion around the propeller, outside the limits of the slipstream or the control volume, which behaves as a solid barrier. As is well known, when the deflection is caused externally by an element outside of the system in motion, a decrease of the induced angle of attack on the blades occurs, whereby decreasing the induced drag and increasing lift and, therefore, traction and performance of the propeller. This decrease of the induced angle of attack generates fewer losses due to blade tip vortex and due to crossflow at the trailing edge. The pressure on the pressure side of the blades increases due to the deflection; this phenomenon has an important additional positive contribution which is to decrease marginal losses at the blade tip and the crossflow at the trailing edge. Although it is real, said deflection is difficult to observe directly, since at first it seems that the flow, after "passing through" the blades, simply continues in the same direction it was following before reaching the propeller. However, said deflection, which corresponds to the "upstream" angle of inclination of the blades with regard to a plane perpendicular to the axis of rotation, can be theoretically understood. As is known, a change in direction is equivalent to an acceleration of the fluid, an acceleration which must be added to the apparent acceleration in the perpendicular direction, i.e. parallel to the axis of rotation. Therefore, the traction of the propeller increases according to the sine of the upstream angle of inclination of the blades, or the sine of the angle of deflection, which have the same value. This increase can be called "floatability". If said angle is 45 degrees, the "coefficient of floatability" would be 1.7 for the equation which establishes the thrust or traction force, therefore by this concept, traction increases by 70% -due to less slip- and apart from that, as previously explained, the induced drag decreases, therefore decreasing the torque absorbed by the propeller, thus further increasing performance. It is necessary to take into account that for a 15-degree angle of attack, the induced drag is approximately three times that of the parasite drag. It must also be taken into account that in this case, unlike the ground effect, the deflection occurs in the blade sweep area, therefore the increase of thrust is maximum due to proximity of the deflection of the jet to the blades. Said "floatability" refers to a dynamic system, i.e. while it is operating in steady state, the propeller and the fluid surrounding it interacting.

In the equation defining the thrust or traction of a classic propeller (force is equal to density times flow rate, and times jet exit velocity minus jet entry velocity: F=ρQ(vₑₓ-vₑₙ)), in the propeller of the present invention, and to obtain said force, it would also be necessary to multiply by one plus the sine of the upstream angle of inclination of the blades, therefore, for a 45 degree angle, it would be necessary to multiply by 1.7, for a 30 degree angle, by 1.5, etc.; these figures would correspond to the "coefficient of floatability".

The invention therefore increases the power output (the aforementioned traction multiplied by the speed of the craft).

On the other hand, the power consumed is equal to the power output plus the kinetic energy that is lost in the unit of time in the slipstream (kinetic energy is equal to one half of the density times the flow rate, and times the square of the jet exit velocity minus the jet entry velocity). The theoretical performance is the ratio of the power output and the power consumed; although the power output increases due to less slip, the performance is always less than one since there is always certain kinetic energy lost in the slipstream. (Thus, the apparent paradox of a performance greater than one - which is impossible- is hereby resolved due to the extraordinary increase of thrust; the theory of the momentum used does not provide an exact explanation of the behavior of the propeller, but it can be understood that it serves as an approach and, especially, to generally explain why it works).

The increase of traction or thrust provided by the propeller of the invention is maintained for any speed of the craft with regard to the classic propeller (i.e. with regard to the propeller with the blades perpendicular to the axis of rotation of the propeller).

In some naval applications with propellers very close to the surface, in order to prevent excessive vibrations, the propeller can preferably be housed inside a nozzle concentric to said propeller and which envelopes the propeller in the axial extension thereof, from the free ends or blade tips, upstream, up to twice its normal distance to the end of the roots or feet of said blades, downstream; this nozzle preferably has the front part of the wall close to the free ends (tips) of the blades, i.e. its radial distance with regard to the blades is very small. Said nozzle can be fixed, i.e. joined to the hull of the craft, or to the anti-ventilation plate or to the tail in the case of outboard engines. The indicated length for the nozzle can be the recommendable minimum length.

In naval propellers, the component of the centrifugal force, which tends to bend the blades, is offset by the reaction of the jet on the pressure side of the blades, since the density of the water is very high, and by the structural resistance of the propeller (marine propellers are usually very heavy-duty).

However, in aerial propellers, the component of the centrifugal force is not offset by either of these two factors due to the scarce density of air (800 times less than the density of water). Therefore, it is appropriate (or necessary) to adopt additional measures, especially in view of the higher number of revolutions per minute, and taking into account the lower structural resistance to bending (although it is possible that there could be cases of aerial propellers having a small normal diameter and slight upstream rake in which, at low rotation speeds, the additional reinforcement elements may be dispensed with).

In aerial applications such as a tractor propeller, each blade may be joined, on the side of the suction side, to an extension of the drive shaft, by means of one or several retention braces (the drive shaft can pass through the hub of the propeller and be joined to it); said extension of the drive shaft would be in upstream direction; the diameter of said extension of the drive shaft, as well as the material, can be the same as those of the drive shaft.

In aerial applications such as the pusher propeller, in which the engine is in front of or upstream from the propeller, each blade can be joined, on the side of the suction side, to the drive shaft by means of one or several retention braces. The drive shaft can be longer than what is usual for the classic propeller, giving way to a larger distance between the engine and the propeller.

In the case of the tractor propeller, to obtain a higher performance and to decrease the aerodynamic drag of the retention braces, it is appropriate for each brace to have the shape-of a blade in feather position for cruising speed (i.e. the brace would have no tractor function, it would only serve to support the centrifugal force of the blades of the propeller).

To prevent or reduce vibrations caused by an excessive extension of the drive shaft with regard to the base bearings, it is appropriate for the retention braces to be perpendicular to the extension of the drive shaft, whether they have the blade shape or not.

In fans for turbojets, each blade can be joined, on the side of the suction side, to the rotor of the turbojet by means of one or several braces. Said rotor can constitute the drive shaft and can also serve directly as a propeller base. The retention braces can be joined by the root thereof to different disks of the rotor of the turbojet, and said rotor can be provided with multiple sets of blades with their corresponding braces along their length, the roots of the different sets of blades being fixed to respective disks of the rotor of the turbojet. Both the blades and braces can be surrounded by a fixed fairing tube.

In fans, it may be appropriate for each retention brace to have the shape of a blade in feather position for cruising speed. The retention braces are preferably fixed.

The blade roots and brace roots can be joined to the disks of the rotor of the turbojet by the locking pin system. According to the locking pin system, the roots are introduced in a housing or channel in the periphery of a disk of the rotor and they are radially held by means of a pin with axial retention.

The optimization conditions of this propeller are the following: the normal diameter, geometric pitch, normal projection of the surface of the blades, i.e. the projection on a plane perpendicular to the axis of rotation and the revolutions per minute, have the same quantitative value as in the corresponding classic propeller for the same engine, the same reduction to the output shaft and performances of the craft with an increase of drag corresponding to the increase of thrust (classic propeller being understood as the one having the blades perpendicular to the axis of rotation); the length of each blade is equal to the length of the conventional blade divided by sinα, and the surface of each blade is equal to the surface of the classic blade divided by sinα, with regard to the corresponding conventional blade for the same engine, the same reduction to the output shaft and the performances of the craft with an increase of drag corresponding to the increase of thrust.

There is a correspondence between the concepts blade length and normal diameter, as well as between perpendicular projection of the surface of the blades and the blade surface, but they do not mean the same. Although perpendicular projection, i.e. the projection of the surface of the blades on a plane perpendicular to the axis of rotation of the propeller, is the same as in the case of assembling a classic propeller on the same engine, because of the upstream rake, its length is longer for the same normal diameter and, therefore, its surface is also greater; although the normal diameter is the same, since the flow direction is noticeably parallel to the axis of rotation of the propeller, the solidity factor increases since the course of a fluid molecule over the pressure side and suction side of the blades is greater; for 45 degrees, the course increases approximately by 41%. As is known, the solidity factor is the ratio between the surface of the blades and the sweep area.

In the technical literature, a blade is divided into a blade root or foot, a body and a blade tip -sometimes this last blade sector is called blade end. The blade tip is the end point separating the leading edge (or "advancing edge") from the trailing edge (or "following edge") of each blade, according to the relative movement of the fluid over the blades.

If the blades are tilted downstream, the deflection of the jet will not occur due to an agent outside of the system in movement -air or water surrounding it- but rather because of the convergence of the jet itself with a speed increase, which would mean greater losses in the slipstream due to the increase of kinetic energy; the "floatability coefficient" would be less than one; in the case of the classic propeller, its value is one.

The advantages of this invention are therefore a considerable increase of the traction and the performance of the marine propeller, aerial propeller or turbojet fan, for the same power used, i.e. consumed, with the resulting reduction of the specific fuel consumption. In the takeoff run of airplanes, for a 45 degree "upstream" rake of the blades, there is 70% more thrust for the same power consumed, which is important since this is when the thrust is most needed. Concerning the headway in boats or ships, the traction increase is less due to the head loss in the nozzle. (This is without taking into account the decrease of induced drag, which increases the performance and indirectly the thrust in the power output).

### BRIEF DESCRIPTION OF THE DRAWINGS

A series of drawings will be very briefly described below which aid in better understanding the invention, and which are expressly related to several embodiments of said invention, presented as illustrative and non-limiting examples thereof.
Figure 1A shows a schematic side view of a propeller suitable, for example, for submarines (the main function of which is to navigate while submerged), with blades tilted at a 45-degree angle upstream with regard to a plane perpendicular to the axis of rotation.
Figure 1B shows a schematic view analogous to the one in Figure 1A, but showing the section or cut of one of the blades on the plane including the axis of rotation and the blade tip.
Figure 1C shows a schematic view of the propeller shown in Figure 1A, but this is a frontal view from downstream.
Figure 2 shows a cross-sectional view of one of the blades of Figure 1A.
Figure 3 shows a schematic view of a two-blade propeller on which vectors representing the centrifugal force and pressure, as well as their components, are illustrated.
Figure 4 shows a schematic view of rectangular-plan blades operating in two different positions, the first position (on the left) is like in the classic propeller (perpendicular to the axis of rotation) and the second position (on the right) is tilted with a 45 degree angle upstream; the course of a fluid molecule over the surface of the blades is shown in both positions.
Figure 5 shows a schematic side view of a propeller with a nozzle assembled on an outboard engine.
Figure 6 shows a schematic view of the structure shown in Figure 5 but this is a frontal view from downstream.
Figure 7 shows a schematic side view of an aerial propeller with two blades and a hub forming a single part, with its braces.
Figure 8 shows a schematic view of the propeller with its slipstream and the distribution of velocities in two sections at a certain distance from it; the angle of inclination of the blades and the angle of deflection of the flow passing through the propeller are indicated.
Figure 9 shows a schematic side view of a fan for bypass turbojets, showing only two of the multiple blades with their corresponding retention braces.

### DESCRIPTION OF PREFERRED EMBODIMENTS OF THE INVENTION

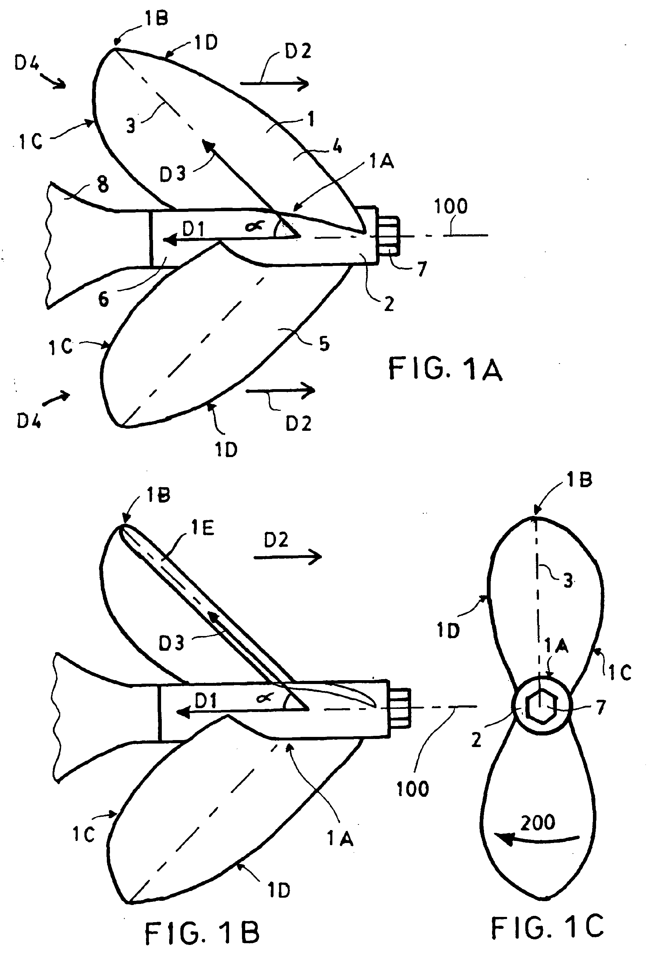

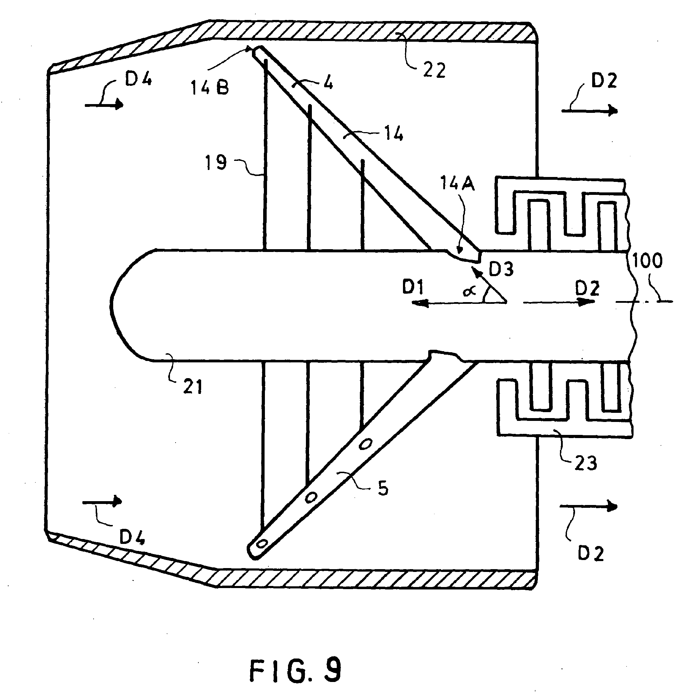

Figures 1A-C, 5, 7 and 9 show different propellers according to the invention, comprising:
a base 2, 15 (in Figure 9, said base forms an integral part of the rotor 21 of a turbojet);
a plurality of elongated blades 1, 14, each blade having a first end 1A, 14A joined to the base and a second free end defining a blade tip 1B, 14B separating a leading edge (or "advancing edge") 1C, 14C of the blade from a trailing edge (or "following edge") 1D, 14D of the blade.

Each propeller is configured so as to rotate on an axis of rotation 100, driven by a drive shaft of a craft for the purpose of propelling said craft in a first direction D1 parallel to the axis of rotation 100 and corresponding to the forward motion direction of the craft, propelling a fluid in a second general direction D2 opposite to said first direction. The blades extend in a third direction D3 from the first end 1A, 14A to the blade tip 1B, 14B. As shown schematically in Figure 1B, said third direction corresponds to the direction in which the cut or section 1E of the blade extends in the plane including the axis of rotation 100 and the blade tip 1B.

According to the invention, said third direction D3 forms, in a plane including the axis of rotation 100, an acute angle α with said first direction D1, 10° ≤ α ≤ 80°. Specifically, in the Figures, α = 45 degrees. In other words, if compared to the "classic" blades perpendicular to the axis of rotation, the blades are tilted "upstream" with an angle of (90° - α), in this case, with 45 degrees.

Figures 1A-1C show a propeller suitable, for example, for a submarine, the blades 1 of which are tilted 45 degrees upstream, as indicated by reference line 3 and the third direction D3 forming an angle α = 45 degrees with a first direction D1 corresponding to the forward motion direction of the craft. The blades 1 are joined to a hub or base 2 assembled on the drive shaft (not shown in Figures 1A-1C) by means of an attachment bolt 7; the upper blade in the Figure has the suction side 4 and the lower blade has the pressure side 5; the support 6 of the base of the propeller comes close to the center of gravity of the blades, therefore the dynamic equilibrium increases. The support bearing of the shaft of the propeller is inside the support 6, integrated in the hull 8 of the craft, as seen in the figure. The bearing can be just radial or radial and axial if there is no other axial element inside. Figures 1A-1C only show two opposite blades so as to not complicate the drawing. Normally, it is preferable for the propeller to have at least three blades. In Figures 1A and 1B, arrows D4 and D2 indicate the direction of the jet or jet stream of water moving the propeller before and after passing through the propeller, respectively. In Figure 1C, arrow 200 indicates the rotational direction of the propeller.

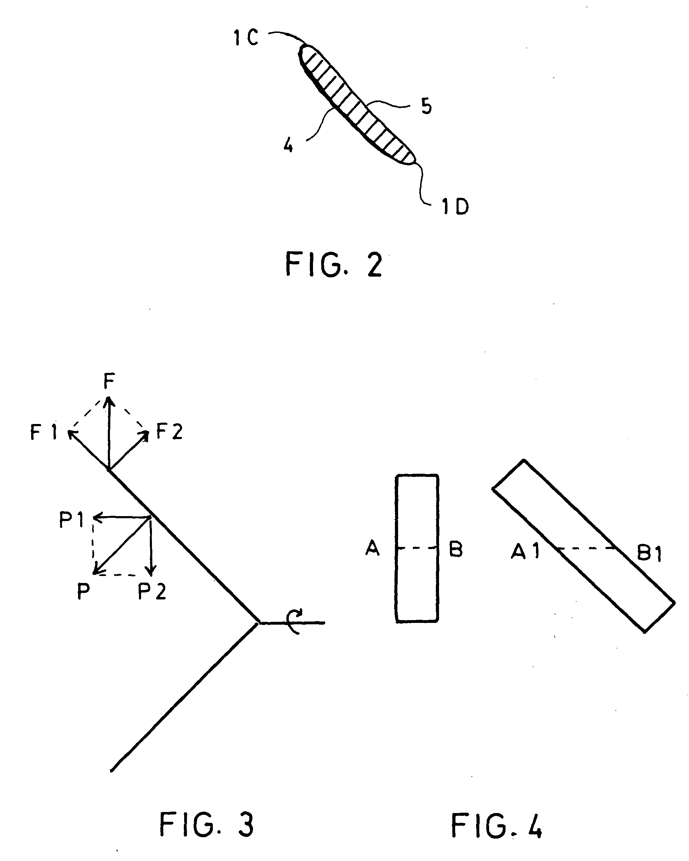

Figure 2 shows the concave-surface pressure side 5 and the convex-surface suction side 4; the figure is oriented in the plane according to Figure 1A, therefore the leading (or advancing) edge 1C of the blade 1 is located in the upper left-hand part in Figure 2, and the trailing (or following) edge 1D of the blade 1 is located in the lower right-hand part.

Figure 3 shows the vector representation of the centrifugal force F and its two components, one component perpendicular to the blade F2 which generates the bending stresses and the other component is in the same direction as the blade F1 generating stretching stresses, with the same modulus, since the rake of the blades is 45 degrees. The representation of the pressure vector P of the propeller, its effective component P1 and the other component P2 are also shown; the force P refers to the static pressure on the conical sweep area of the blades.

Figure 4 shows the trajectory of a fluid molecule on the rectangular blade surface, in the case of a non-tilted blade 1' (i.e. a classic propeller blade according to that discussed above) (this case corresponds to the trajectory from A to B), as in the case of a blade 1" of a propeller according to the invention, tilted 45 degrees (this case corresponds to the course from A1 to B1). As can be observed, the course (A1-B1) in the second case is exactly the diagonal of a square having as a side the course (A-B) of the molecule in the first case. Therefore, the solidity factor increases.

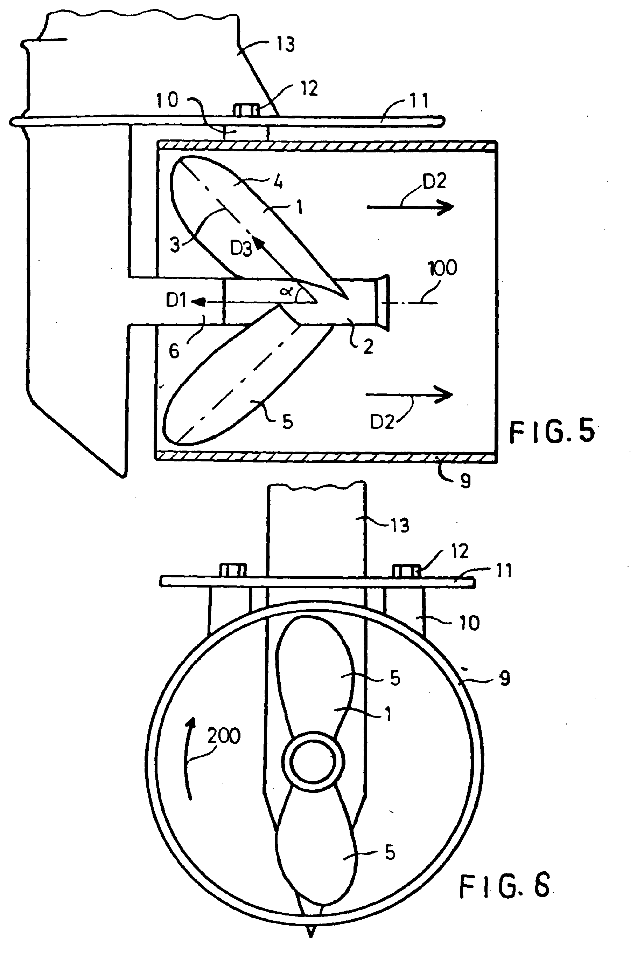

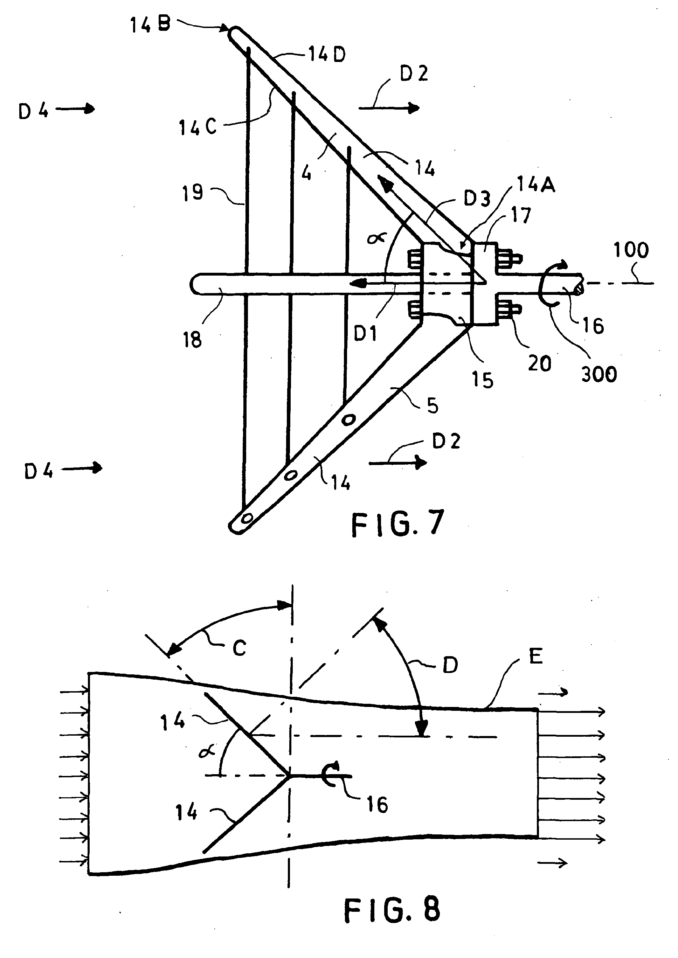

Figures 5 and 6 show an outboard propeller with a cylindrical nozzle 9 and anti-ventilation plate 11; the cylindrical nozzle 9 is joined to the anti-ventilation plate 11 by means of bolts 12 passing through the anti-ventilation plate and housed in pegs 10 welded to the nozzle. The anti-ventilation plate 11 is integrated in a tail 13 of an outboard engine. In Figure 5, the arrows D2 indicate the direction of the water that has passed through the propeller and in Figure 6, arrow 200 indicates the rotational direction of the propeller. (The other numerical references correspond to elements analogous to those already discussed in Figure 1A).

Figure 7 shows an aerial propeller with aerial blades 14 (with their respective leading edges 14C and trailing edges 14D), the blade in the upper part having the suction side 4 and the blade in the lower part having the pressure side 5; the hub or base 15 of the propeller, the drive shaft 16, a connection flatbar 17 for connection or the shaft, an extension 18 of the drive shaft passing through the hub 15, retention braces 19 (which can be high traction-resistant solid steel cylinders), and bolts with nuts 20 coupling the hub or base 15 of the propeller to the flatbar 17 of the drive shaft are also observed. The arrow 300 in the drive shaft 16 indicates the rotational direction (corresponding to forward motion); the other four arrows D2 and D4 indicate the direction and orientation of the air jet passing through the propeller, before and after passing through the propeller, respectively. The retention braces 19 may have frusto-conical shaped "outer" ends, with a larger base located on the ends and a smaller base with the same diameter as the braces, these frusto-conical ends being housed in respective frusto-conical housings made in the blades. Naturally, to decrease the aerodynamic drag of the frusto-conical ends, the latter can be machined for integrating their surface in the pressure side of the blades. The retention braces can be joined to the extension 18 of the drive shaft by means of locking pins (not shown in the figure). If decreasing the aerodynamic drag and noise is desired, each brace can have a blade shape with symmetrical profile, with the chord having the same value along the entire length of the brace and equal to the diameter of the smaller base of the peripheral cone frustum, so that the brace can be inserted through the blade, and with said braces in the form of blades fixed in feather position for cruising speed, i.e. without tractor function.

Figure 8 shows a schematic representation of the aerial blades 14 of the previous figure, as well as the drive shaft 16; it also shows the upstream angle of inclination C (complementary to angle α) of the blades with regard to the plane perpendicular or normal to the drive shaft and passing through the center of the hub or base of the propeller. The figure also shows the angle of deflection D between a line perpendicular to the blade and another line parallel to the axis of rotation of the propeller, in one plane. It can be seen that the upstream angle of inclination C of the blades as well as the angle of deflection D of the fluid are always equal (and complementary to angle α); in this specific case, they are 45 degrees. The angle of deflection is formed by a line parallel to the axis of rotation and by the direction the fluid jet would follow as from the sweep area, if said "external fluid effect" did not occur (i.e. following directions perpendicular to the conical sweep area). However, in reality and according to that discussed above, the fluid is forced to an outflow substantially parallel to the axis of rotation, in what is called "second direction D2". "Deflection" as such cannot be seen since the fluid follows the same direction before and after the sweep area, but it does in fact exist. In reality, the angle of deflection D is not exactly the one shown in Figure 8, but rather it is somewhat larger than the angle of inclination C of the blades since there is a certain convergence of the fluid, as can be seen in the boundary surface E of the slipstream. However, to simplify the explanation and calculations, it can be considered that the angles C and D are approximately identical and that the direction of the fluid jet after (downstream) the propeller is substantially parallel to the axis of rotation.

Figure 9 shows the aerial blades 14 with the retention braces 19 thereof assembled on the rotor of the turbojet 21 (only two of the multiple blades that the -mechanism has are shown for greater simplicity and clarity of the drawing). The fairing tube 22 surrounds the blades for the purpose of reducing the speed of the air reaching the fan, as it is divergent with regard to the direction of the current. The axial compressor 23 is also schematically shown. It is appropriate for both the roots of the blades 14 and the roots of the retention braces 19 to be anchored to the disks of the rotor by the locking pin system, which is one of the systems currently used for this type of mechanisms.

The retention braces 19 are especially suitable in aerial applications. However, propellers having a small normal diameter, low revolutions and up to a 15-degree rake (i.e. with α ≥ 75°), it is likely that braces are not necessary. Turbojet fans correspond to one particular application of the aerial propellers.

The materials, size, shape and arrangement of the elements will be susceptible to variation, on the condition that this implies no alteration of the basic concept of the invention.

Throughout the present description and claims, the word "comprises" and variants thereof, such as "comprising", do not aim to exclude other components.

## Claims

1. A propeller comprising:
a base (2, 15);
a plurality of blades (1, 14), each blade having a first end (1A, 14A) joined to the base and a second free end defining a blade tip (1B, 14B) separating a leading edge (1C, 14C) of the blade from a trailing edge (1D, 14D) of the blade;
the propeller being configured so as to rotate about an axis of rotation (100), driven by a drive shaft of a craft for the purpose of propelling said craft in a first direction (D1) parallel to the axis of rotation (100) and corresponding to the forward motion direction of the craft, propelling a fluid in a second general direction (D2) opposite to said first direction (D1);
the blades (1, 14) extending in a third direction (D3) from the first end (1A, 14A) to the blade tip (1B, 14B),
**characterized in that**
said third direction (D3) forms an acute angle α with said first direction (D1), 10° ≤ α ≤ 80°, in a plane including the axis of rotation (100).

2. A propeller according to claim 1, **characterized in that** 20° ≤ α ≤ 70°.

3. A propeller according to claim 2, **characterized in that** 30° ≤ α ≤ 60°.

4. A propeller according to claim 3, **characterized in that** 40° ≤ α ≤ 50°.

5. A propeller according to claim 4, **characterized in that** α = 45°.

6. A propeller according to any of claims 1-5, **characterized in that** said third direction (D3) is a direction in which one section (1E) of the blade extends in a plane including the axis of rotation (100) and the blade tip.

7. A propeller according to any of the preceding claims, **characterized in that** it has two blades (1, 14).

8. A propeller according to any of claims 1-6, **characterized in that** it comprises at least three blades (1, 14).

9. A propeller according to any of the preceding claims, **characterized in that** the blades have an elongated configuration in the direction from the first end (1A, 14A) to the second end.

10. A propeller according to any of the preceding claims, **characterized in that** each blade has a leading edge (1C, 14C) located upstream from a trailing edge (1D, 14D), both the leading edge and trailing edge extending substantially in said third direction (D3), substantially from the first end to the second end.

11. A propulsion system, **characterized in that** it comprises at least one propeller according to any of claims 1-10, and a drive shaft (16) joined to the propeller such that the drive shaft (16) can turn the propeller about its axis of rotation (100).

12. A propulsion system according to claim 11, **characterized in that** it further comprises a nozzle (9) concentrically located around the axis of rotation (100) of the propeller and laterally enveloping the propeller, said nozzle having a fluid entry front end and a fluid exit rear end.

13. A propulsion system according to any of claims 11 and 12, **characterized in that** each blade (14) is joined to the drive shaft or to an element configured as an axial extension of the drive shaft (18, 21) by means of at least one retention brace (19).

14. A propulsion system according to claim 13, **characterized in that** each blade is joined to the drive shaft or to an element configured as an axial extension of the drive shaft (18, 21) by means of at least two retention braces (19).

15. A propulsion system according to any of claims 13-14, **characterized in that** each retention brace (19) is arranged perpendicularly to the axis of rotation (100) of the propeller.

16. A propulsion system according to any of claims 13-15, **characterized in that** each retention brace has a symmetrical profile and a shape of a blade in feather position for craft cruising speed.

17. A propulsion system according to any of claims 13-16, **characterized in that** it forms part of a turbojet fan, each blade (14) being joined to a propeller base forming part of the drive shaft constituted of a rotor (21) of the turbojet, each blade (14) being joined to said rotor (21) also by means of at least one retention brace (19).

18. A propulsion system according to claim 17, **characterized in that** the propeller is radially surrounded by a fairing tube (22).

19. A craft, **characterized in that** it includes a propulsion system according to any of claims 11-18.

20. A craft according to claim 19, **characterized in that** it is an aquatic craft.

21. A craft according to claim 19, **characterized in that** it is a submarine craft.

22. A craft according to claim 19, **characterized in that** it is an aircraft.
